# EUROPÄISCHE PATENTSCHRIFT

(11) **EP 0 278 400 B1**
(45) Veröffentlichungstag und Bekanntmachung des Hinweises auf die Patenterteilung: **28.07.1993**
(21) Anmeldenummer: 88101615.8
(22) Anmeldetag: 04.02.1988
(51) Int. Cl.: B29C 49/02

(54) **Vorrichtung zum Herstellen eines Kunststoff-Hohlkörpers mit durch Blasen geformtem Körperteil**
Apparatus for the manufacture of a hollow plastic article with a blow-moulded body section
Dispositif pour la fabrication d'un corps creux en matière plastique avec un corps moulé par soufflage

(30) Priorität: 12.02.1987 DE 3704265
(43) Veröffentlichungstag der Anmeldung: 17.08.1988
(73) Patentinhaber: OSSBERGER-TURBINENFABRIK GMBH & CO., 91781 Weissenburg (DE)
(72) Erfinder: Linss, Gerhard, D-8832 Weissenburg/Bayern (DE); Ossberger, Karl-Friedrich Dr., D-8832 Weissenburg/Bayern (DE)
(74) Vertreter: Böhme, Volker, Dipl.-Ing.

(56) Entgegenhaltungen:
- DE-A- 2 528 964
- FR-A- 2 275 300
- US-A- 3 329 996
- US-A- 3 343 210
- US-A- 4 178 976
- PATENT ABSTRACTS OF JAPAN, Band 10, Nr. 261 (M-514)[2317], 5. September 1986; & JP-A-61 86 234 (MITSUI) 01-05-1986

## Beschreibung

Die Erfindung betrifft eine Vorrichtung zum Herstellen eines aus thermoplastischem Kunststoff bestehenden Hohlkörpers mit einem durch Spritzgießen in einer Ausnehmung geformten Kopfstück und einem durch Blasformen eines daran einstückig anschließenden ausgepreßten Rohrabschnittes geformten Körperteil, mit einer in einem Düsenmundstück angeordneten Ringdüse, in der ein hin- und herverschiebbarer Düsenkegel mit dem Düsenmundstück eine ringspaltartige Düsenöffnung begrenzt, mit einem in dem Düsenkegel angeordneten, axial verschiebbaren, die Kopfstück-Ausnehmung begrenzenden Stempel, mit einer gegenüber der Ringdüse die Ausnehmung für das Kopfstück aufweisenden, in axialer Richtung hin-und herverschiebbaren Abzugseinrichtung zum Formen des Körperteils durch Wegziehen des Kopfstückes von dem Düsenmundstück, und mit einer mehrteiligen Blasform mit seitlich hin- und herbewegbaren Blasformteilen.

Bei einer bekannten (FR-A-2 275 300) Vorrichtung dieser Art wird der Rohrabschnitt nur zur Bildung des Bodens von Bodenstücken der Blasformteile gepreßt und dann aufgeblasen, wobei die ringspaltförmige Düsenöffnung mit dem Außenrand der der Ringdüse zugewandten Öffnung der Kopfstück-Ausnehmung abschließt, dieser Außenrand auch der Außenrand der Kopfstückhöhlung der Ausnehmung ist und die ringspaltförmige Düsenöffnung in gerader Fortsetzung des Rohrabschnittes vor jedem Aufblasen liegt. Die ringspaltförmige Düsenöffnung fluchtet auf der radial außen liegenden Seite mit dem Außenrand des Kopfstückhohlraumes. Der Außendurchmesser des Körperteiles kann durch Aufblasen relativ zum Außendurchmesser des Kofpstückes nur eine beschränkte Größe erhalten. Durch das Aufblasen wird auch die Wanddicke des das Kopfstück umgebenden Bereiches des Körperteiles verringert. Eine weitere bekannte (JP-A-6 186 234) Vorrichtung weist keinen Stempel auf, der in dem Düsenkegel angeordnet ist, axial verschiebbar ist und die Kopfstück-Ausnehmung begrenzt.

Aufgabe der Erfindung ist es daher, eine Vorrichtung der eingangs genannten Art zu schaffen, die zusätzliche bzw. neuartige Gestaltungen des Hohlkörpers-Körperteiles ermöglicht, indem der Außendurchmesser des Körperteiles ungewöhnlich groß relativ zum Außendurchmesser des Kopfstückes ist. Die erfindungsgemäße Vorrichtung ist, diese Aufgabe lösend, dadurch gekennzeichnet, daß die Kopfstück-Ausnehnung der Abzugseinrichtung an ihrer der Ringdüse zugewandten Seite einen Scheiben-Hohlraum aufweist, wobei der Außenrandstreifen des Scheiben-Hohlraumes in die Düsenöffnung übergeht, daß der in dem Düsenkegel angeordnete Stempel mit seiner Stirnseite den Scheiben-Hohlraum begrenzt, und daß mittels des Stempels nach dem Spritzgießen die Dicke des Scheiben-Hohlraumes verringerbar ist.

Vor dem Aufblasen wird eine weitere Formung des Vorformling-Rohrabschnittes vorgenommen, damit aus dem so geformten Vorformling-Rohrabschnitt ein entsprechend besonders gestalteter Hohlkörper wird, der bisher nur durch Auspressen aus der Düsenöffnung und durch Aufblasen in die Blasform geformt wird. Dadurch, daß die Düsenöffnung im Vergleich mit der bekannten Vorrichtung einen besonderen Versatz relativ zu anderen Teilen der Vorrichtung aufweist, werden besondere Gestaltungen des Vorformling-Rohrabschnittes vor dem Aufblasen erreicht.

Es ist der Außendurchmesser des Rohrabschnittes des aufzublasenden Vorformlings größer als der Außendurchmesser des Kopfstückes, da die in dem Scheiben-Hohlraum gespritzte Scheibe Schulter bzw. Decke des Hohlkörpers bildet. Da die Scheibe zum Durchmesser des Hohlkörpers beiträgt, erreicht man durch Aufblasen einen Hohlkörper-Durchmesser, der weit größer ist als der, der bei gleicher Wandstärke des Vorformlings mit einem dem Kopfstück entsprechenden Vorformling erreichbar ist. Es läßt sich ein Vorformling mit einer bestimmten Wanddicke nicht beliebig weit aufblasen. Es wird der Durchmesser des gepreßten Rohrteiles vergrößert. Mit dem Stempel läßt sich die Dicke der gespritzten Scheibe nach dem Spritzen auf ein Maß verringern, wie es durch Spritzen nicht herstellbar ist.

Besonders zweckmäßig und vorteilhaft ist es, wenn ein in die Kopfstück-Ausnehmung ragender Blaszapfen bei auf der Ringdüse sitzender Abzugseinrichtung in eine Bohrung der Ringdüse ragt. Obwohl die Ringdüse nicht mit einem Fortsatz in die Ausnehmung ragt und der Blaszapfen nicht im Material des Kopfstückes endet, ist ein Einblasen von der Abzugseinrichtung her ermöglicht.

Besonders zweckmäßig und vorteilhaft ist es sodann, wenn der Durchmesser des Scheiben-Hohlraumes mindestens doppelt so groß ist wie der Durchmesser des Kopfstück-Hohlraumes am Übergang in den Scheiben-Hohlraum. Dies ist eine in jedem Fall erreichbare, bereits beachtliche Vergrößerung des Durchmessers des Hohlkörpers.

In der Zeichnung ist eine bevorzugte Ausführungsform der Erfindung dargestellt und zeigt
- Fig. 1: in einem vertikalen Schnitt wesentliche Teile einer Vorrichtung zum Herstellen eines Kunststoff-Hohlkörpers mit durch Blasen geformtem Körperteil, in einer ersten Betriebsstellung,
- Fig. 2: die Vorrichtung gemäß Fig. 1 in einer zweiten Betriebsstellung und
- Fig. 3: die Vorrichtung gemäß Fig. 1 in einer dritten Betriebsstellung.

Die Vorrichtung gemäß Zeichnung besitzt eine Ringdüse (1), die ein ortsfestes Düsenmundstück (2) umfaßt, in dem ein Düsenkegel (3) gemäß einem Doppelpfeil (32) mittels einer nicht gezeigten Kolben-Zylinder-Einrichtung hin- und herbewegbar ist. Der Düsenkegel (3) und das Düsenmundstück (2) begrenzen zwischen sich einen Ringkanal (9), der nach vorne in eine ringspaltartige Düsenöffnung (10) übergeht und dem von hinten über eine Rohrleitung thermoplastischer Kunststoff zugeführt wird. Zur Düsenöffnung (10) hin ist der Düsenkegel (3) unter einem geringeren Winkel konisch als die Innenwand des Düsenmundstückes, so daß die Düsenöffnung (10) abgesperrt wird, wenn der Düsenkegel (3) nach vorne geschoben wird.

Oberhalb der Ringdüse (1) ist eine Abzugseinrichtung (13) vorgesehen die mittels einer nicht gezeigten Kolben-Zylinder-Einrichtung gemäß einem Doppelpfeil (27) hin- und herbewegbar ist und die nach unten hin eine Ausnehmung (16) mit Hinterschnitt bzw. Hintergriff bildet, weshalb die Abzugseinrichtung in nicht näher gezeigter Weise teilbar und wieder zusammensetzbar ist. Die Abzugseinrichtung (13) weist eine radial schräg geneigte kreisringartige Auflagefläche (17) auf, die einer Stirnfläche (18) des Düsenmundstückes (2) angepaßt entspricht.

Beiderseits der Ringdüse (1) und der Abzugseinrichtung (13) ist je ein Blasformteil (19) einer zweiteiligen Blasform vorgesehen, das mittels einer nicht gezeigten Kolben-Zylinder-Einrichtung hin- und herbewegbar ist. Jedes Blasformteil (19) ist mit einem Bodenstück (22) versehen, das mit einer schrägen Auflagefläche (23) auf der Stirnfläche (18) des Düsenmundstückes (2) aufsitzen kann.

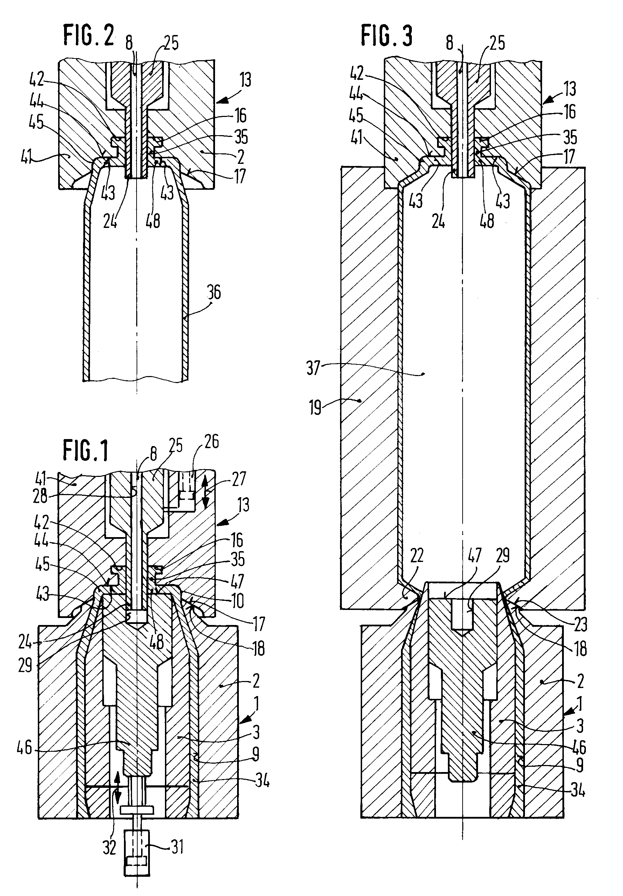

Es ist ein Blaszapfen (24) der Abzugseinrichtung (13) vorgesehen, der mittig in die Ausnehmung (16) ragt und aus dieser zur Ringdüse (1) hin hervorragt. Der Blaszapfen 24 sitzt an einem Rhor 25, das mittels einer nicht gezeigten Kolben-Zylinder-Einrichtung gemäß einem Doppelpfeil (27) hin- und herverstellbar ist. Es wird der Blasöffnung (8) Blasluft über eine Bohrung (28) in Rohr (25) und Blaszapfen (24) zugeführt. Der Blaszapfen (24) ragt gemäß Fig. 1 bei auf der Ringdüse sitzender Abzugseinrichtung (13) in eine Bohrung (29) der Ringdüse, ohne die Bohrung in axialer Richtung voll zu füllen.

Die Abzugseinrichtung (13) bildet einen Formblock (41), in dem die Ausnehmung (16) vorgesehen ist, die aus einem Kopfstück-Hohlraum (42) und einem Scheiben-Hohlraum (43) besteht. Der Scheiben-Hohlraum (43) bildet die der Ringdüse (1) zugewandte Öffnung der Ausnehmung (16) und weist einen Außenrand auf, der gegenüber dem der Ringdüse (1) zugewandten Außenrand des Kopfstück-Hohlraumes um einen Versatz (44) radial nach außen gerichtet ist. Die in axialer Richtung gemessene Dicke des Scheiben-Hohlraumes (43) ist merklich geringer als die des Kopfstück-Hohlraumes (42). Gemäß Fig. 1 liegt der Scheiben-Hohlraum (42) mit einem Randstreifen (45) über der Düsenöffnung (10). Bei der Vorrichtung ist die Ringdüse (10) nicht mit einer Blaseinrichtung versehen. Jedoch ist in dem Düsenkegel (3) ein Stempel (46) angeordnet, der mittels einer Kolben-Zylinder-Einrichtung (31) gemäß einem Doppelpfeil (32) hin- und herverschiebbar ist, dessen Stirnseite (47) gemäß Fig. 1 beim Spritzen diesen Scheiben-Hohlraum (43) begrenzt und der die Bohrung (29) mittig aufnimmt.

Gemäß Fig. 1 wird thermoplastischer Kunststoff (34) über die voll geöffnete Düsenöffnung (10) gespritzt, um ein Kopfstück (35) und eine damit einstückige Scheibe (48) zu bilden. Danach wird gemäß Fig. 2 aus einer nur teilweise geöffneten Düsenöffnung Kunststoff ausgepreßt und die Abzugseinrichtung (13) wegbewegt, so daß ein rohrartiger Vorformling-Rohrabschnitt (36) entsteht, der an den Randstreifen (45) der in dem Scheiben-Hohlraum (43) gespritzten Scheiben anschließt. Gemäß Fig. 3 wird bei voll vorgeschobenem Düsenkegel (3) und voll geschlossener Düsenöffnung (10) nach dem Schließen der Blasformteile (19) aufgeblasen, so daß ein Körperteil (37) entsteht.

## Patentansprüche

1. Vorrichtung zum Herstellen eines aus thermoplastischem Kunststoff bestehenden Hohlkörpers mit einem durch Spritzgießen in einer Ausnehmung (16) geformten Kopfstück (35) und einem durch Blasformen eines daran einstückig anschließenden ausgepreßten Rohrabschnittes (36) geformten Körperteil (37), mit einer in einem Düsenmundstück (2) angeordneten Ringdüse (1), in der ein hin- und herverschiebbarer Düsenkegel (3) mit dem Düsenmundstück (2) eine ringspaltartige Düsenöffnung (10) begrenzt, mit einem in dem Düsenkegel (3) angeordneten, axial verschiebbaren, die Kopfstück-Ausnehmung (16) begrenzenden Stempel (46), mit einer gegenüber der Ringdüse (1) die Ausnehmung (16) für das kopfstück (35) aufweisenden, in axialer Richtung hin- und herverschiebbaren Abzugseinrichtung (13) zum Formen des Körperteils (37) durch Wegziehen des Kopfstückes (35) von dem Düsenmundstück (2), und mit einer mehrteiligen Blasform mit seitlich hin- und herbewegbaren Blasformteilen (19), **dadurch gekennzeichnet,** daß die Kopfstück-Ausnehmung (16) der Abzugseinrichtung (13) an ihrer der Ringdüse (1) zugewandten Seite einen Scheibenhohlraum (43) aufweist, wobei der Außenrandstreifen des Scheibenhohlraumes (43) in die Düsenöffnung (10) übergeht, daß der in dem Düsenkegel (3) angeordnete Stempel (46) mit seiner Stirnseite den Scheibenhohlraum (43) begrenzt, und daß mittels des Stempels (46) nach dem Spritzgießen die Dicke des Scheibenhohlraumes (43) verringerbar ist.

2. Vorrichtung nach Anspruch 1, **dadurch gekennzeichnet,** daß ein in die Kopfstück-Ausnehmung (16) ragender Blaszapfen (24) bei auf der Ringdüse (1) sitzender Abzugseinrichtung (13) in eine Bohrung (29) der Ringdüse (1) ragt.

3. Vorrichtung nach Anspruch 1 oder 2, **dadurch gekennzeichnet,** daß der Durchmesser des Scheiben-Hohlraumes (43) mindestens doppelt so groß ist wie der Durchmesser des Kopfstück-Hohlraumes (42) am Übergang in den Scheiben-Hohlraum (43).

## Claims

1. Apparatus for the manufacture of a hollow article of thermoplastic synthetic material with a head section (35) moulded by injection moulding in a recess (16) and a body section (37) moulded by blow moulding a pressed tubular portion (36) which adjoins the head section in one piece, having a tubular die (1) which is arranged in a die orifice (2) and in which a die torpedo (3) which can be pushed back and forth delimits, together with the die orifice (2), a tubular gap-type die opening (10), having an axially displaceable male mould (46) which is arranged in the die torpedo (3) and which delimits the head section recess (16), having an extraction device (13), which has opposite the tubular die (1) the recess (16) for the head section (35) and which is axially displaceable back and forth, for moulding the body section (37) by drawing the head section (35) away from the die orifice (2), and having a multi-part blow mould with blow mould parts (19) which can be moved laterally to and fro, characterized in that the head section recess (16) of the extraction device (13) has a flat cavity (43) on its side facing the tubular die (1), the outer edge strip of the flat cavity (43) merging into the die opening (10), in that the male mould (46) arranged in the die torpedo (3) delimits the flat cavity (43) by means of its end side, and in that the thickness of the flat cavity (43) can be reduced by means of the male mould (46) after injection moulding.

2. Apparatus according to Claim 1, characterized in that a blow moulding mandrel (24) projecting into the head section recess (16) projects into a bore (29) in the tubular die (1) when the extraction device (13) is seated on the tubular die (1).

3. Apparatus according to Claim 1 or 2, characterized in that the diameter of the flat cavity (43) is at least twice as large as the diameter of the head section cavity (42) at the transition to the flat cavity (43).

## Revendications

1. Dispositif pour fabriquer un corps creux composé d'une matière synthétique thermoplastique et possédant une pièce de tête (35) formée par moulage par injection dans un évidement (16) et une partie corps (37) formée par moulage par soufflage d'un segment tubulaire (36) extrudé qui s'y raccorde en seule pièce, ce dispositif comprenant : une buse annulaire (1) agencée dans une pièce de bouche (2) de buse dans laquelle un cône (3) de buse mobile en mouvement alternatif délimite une ouverture (10) de buse en forme de fente annulaire ; un poinçon (46) disposé dans le cône (3) de buse mobile en translation axiale, qui délimite l'évidement (16) de pièce de tête ; un dispositif de tirage (13) qui présente 1'évidement (16) servant pour la pièce de tête (35) en face de la buse annulaire (1), qui peut se déplacer en translation alternative dans la direction axiale, et qui sert à former la partie corps (37) en tirant la pièce de tête (35) pour l'éloigner de la pièce de bouche (2) de la buse ; et un moule de soufflage en plusieurs parties, comprenant des parties (19) de moule de soufflage mobiles en mouvement latêral alternatif, caractérisé en ce que l'évidement (16) de pièce de tête du dispositif de tirage (13) présente une empreinte (43) de disque sur son côté dirigé vers la buse annulaire (1) , la bande de bord extérieur de l'empreinte (43) de disque se raccordant à l'ouverture (10) de buse, en ce que le poinçon (46) disposé dans le cône (3) de buse délimite l'empreinte (43) de disque par sa surface frontale et en ce que la profondeur de l'empreinte de disque (43) peut être réduite au moyen du poinçon (46) après le moulage par injection.

2. Dispositif selon la revendication 1, caractérisé en ce qu'une tubulure de soufflage (24) qui est engagée dans l'évidement (16) de pièce de tête s'enfonce dans un perçage (29) de la buse annulaire (1) lorsque le dispositif de tirage (13) est appuyé sur la buse annulaire.

3. Dispositif selon la revendication 1 ou 2, caractérisé en ce que le diamètre de l'empreinte (43) de disque est au moins deux fois plus grand que le diamètre de l'empreinte (42) de la pièce de tête à son raccordement avec l'empreinte (43) de disque.
